# EUROPEAN PATENT APPLICATION

(11) **EP 4 439 771 A1**
(43) Date of publication of application: **02.10.2024**
(21) Application number: 23882998.0
(22) Date of filing: 19.10.2023
(51) Int. Cl.: H01M 10/0585, H01M 10/0562, H01M 4/13, H01M 10/052, H01M 4/02

(54) **ALL-SOLID-STATE BATTERY AND MANUFACTURING METHOD THEREFOR**

(30) Priority: 26.10.2022 KR 20220139084; 18.10.2023 KR 20230139649
(71) Applicant: LG Energy Solution, Ltd., Seoul 07335 (KR)
(72) Inventor: YOM, Jeeho, Daejeon 34122 (KR)
(74) Representative: Goddar, Heinz J.
(86) International application number: PCT/KR2023/016235
(87) International publication number: WO 2024/090891

(57) **Abstract**

The present invention is an all-solid-state battery with low surface resistance of the electrodes of a unit cell and a method for manufacturing the same.

## Description

### [Technical Field]

This application claims the benefit and priority to Korean Patent Application No. 10-2022-0139084, filed on October 26, 2022, and Korean Patent Application No. 10-2023-0139649, filed on October 18, 2023, the disclosures of which are incorporated herein by reference in their entirety.

The present invention relates to an all-solid-state battery and a method of manufacturing the same.

### [Related Art]

A secondary battery is a device that converts external electrical energy into chemical energy and stores it to generate electricity when needed. They are also called rechargeable batteries because they can be recharged multiple times. Common types of secondary batteries include lead-acid batteries, nickel-cadmium batteries (NiCd), nickel-metal hydride batteries (NiMH), and lithium secondary batteries. Secondary batteries offer both economic and environmental benefits over primary batteries, which are used once and discarded.

On the other hand, as wireless communication technology continues to advance, the demand for lightweight, thin, and miniaturized portable devices and automotive accessories is increasing, and the demand for secondary batteries used as energy sources for these devices is increasing. In particular, as hybrid vehicles and electric vehicles are becoming practical in terms of preventing environmental pollution, research is emerging to use secondary batteries in the batteries of these next-generation vehicles to reduce manufacturing costs and weight and extend their lifespan. Among the various secondary batteries, lithium secondary batteries, which are lightweight, exhibit high energy density and operating potential, and have a long cycle life, have recently gained prominence.

Generally, lithium secondary batteries are manufactured by mounting an electrode laminate consisting of a negative electrode, a positive electrode, and a separator inside a pouch-type case of a metal can or aluminum laminate sheet, such as a cylindrical or angular shape, and injecting an electrolyte into the electrode laminate.

In the past, electrolytes for lithium secondary batteries have been mainly liquid electrolytes made of lithium salts dissolved in non-aqueous organic solvents. However, these liquid electrolytes are prone to electrode material degradation and volatilization of organic solvents, as well as combustion or explosion due to elevated ambient temperatures and the temperature of the battery itself, and leakage, making it difficult to realize various types of highly safe lithium secondary batteries.

On the other hand, all-solid-state batteries, which utilize solid electrolytes, have the advantage of eliminating organic solvents, making it possible to fabricate electrode stacks in a safe and simple form.

All-solid-state batteries can be categorized into oxide, polymer, and sulfide based on the raw material of the solid electrolyte. Sulfide-based all-solid batteries are gaining attention because of their superior lithium ion conductivity compared to other types of batteries. However, despite their superior characteristics, they have a higher ionic conductivity and electrical resistance between the positive and negative electrodes than liquid batteries, resulting in a lower lifespan and power output than conventional batteries utilizing liquid electrolytes.

To improve the lifetime and output of the unit cell, you may want to consider using a different positive or negative electrode, a different type of solid electrolyte, or a different assembly method.

In the case of sulfide-based all-solid batteries, when the electrodes and solid electrolyte are pressurized in a roll-to-roll fashion, such as in conventional lithium ion batteries (LIBs), the interior of the battery becomes porous and interfacial contact becomes difficult. Therefore, it is manufactured by a three-dimensional pressurizing method through hydrostatic pressurizing. In this hydrostatic pressurizing method, the size of the cell that can be pressurized is limited by the chamber size of the isostatic pressurizing equipment such as CIP and WIP, which can limit the scale up of all-solid-state battery production.

In addition, electrodes fabricated by applying electrode active materials to the current collector, such as by overcoating, have a high surface resistance, which can cause degradation of all-solid-state batteries.

Therefore, there is a need for research on all-solid-state batteries and fabrication methods that can solve the problems.

### [Prior art]

### [Patent Literature]

(Patent Literature No. 1) Korean Laid-Open Publication No. 10-2021-0119140
(Patent Literature No. 2) Korean Laid-Open Publication No. 10-2020-0129381

### [Detailed Description of the Invention]

### [Technical Problem]

The present invention aims to improve the performance of an all-solid-state battery by reducing the surface resistance of a positive electrode in contact with a solid electrolyte layer and a negative electrode in contact with the solid electrolyte layer in a positive electrode and a negative electrode constituting a unit cell.

Further, it is an object of the present invention to provide a method for manufacturing an all-solid state battery which provides low surface resistance of the positive electrode in contact with the solid electrolyte layer and of the negative electrode in contact with the solid electrolyte layer, easy alignment between the electrodes, and simple fabrication method.

### [Technical Solution]

To accomplish the objectives, the present invention provides an all-solid-state battery, which comprises: a first unit cell comprising a current collector, a negative electrode, a solid electrolyte layer, and a positive electrode stacked sequentially; and a second unit cell comprising a current collector, a positive electrode, a solid electrolyte layer, and a negative electrode stacked sequentially, wherein the first and second unit cells are alternately stacked so that electrodes of a same polarity are located on both sides of the current collector, wherein, in the first and second unit cells, a surface resistance of the negative electrode in contact with the solid electrolyte layer and the positive electrode in contact with the solid electrolyte layer is 3mΩ/cm² or less.

In one embodiment of the present invention, the solid electrolyte layer may comprise a sulfide-based solid electrolyte.

In one embodiment of the present invention, the all-solid-state battery may comprise current collector formed on an electrode located at an outermost layer.

In one embodiment of the present invention, in the first unit cell and the second unit cell, a surface resistance of the negative electrode in contact with the solid electrolyte layer and the positive electrode in contact with the solid electrolyte layer may be 0.3 mΩ/cm² or less.

In one embodiment of the a total thickness of the current collector and the negative electrode may be from 20 µm to 80 µm, and a total thickness of the current collector and the positive electrode may be 100 µm to 200 µm.

The present invention also provides a method of manufacturing an all-solid-state battery, the method comprising: (1) fabricating a negative electrode laminate by stacking a first release film, a negative electrode, and a second release film sequentially; (2) fabricating a positive electrode laminate by stacking a first release film, a positive electrode, and a second release film sequentially; (3) peeling off the second release film of the negative electrode laminate and the second release film of the positive electrode laminate; (4) disposing a solid electrolyte layer between the negative electrode laminated on the first release film and the positive electrode laminated on the first release film; (5) peeling off the first release film of the negative electrode and the first release film of the positive electrode, punching them into a certain size, and fabricating a plurality of unit cells including the negative electrode, the solid electrolyte layer, and the positive electrode; (6) disposing a current collector between one unit cell and another unit cell while positioning electrodes of a same polarity on both sides of the current collector; and (7) laminating a current collector on an electrode located at an outermost layer.

In one embodiment of the present invention, the method may further comprise: pressurizing the negative electrode laminate of step (1) and pressurizing the positive electrode laminate of step (2).

In one embodiment of the present invention, a thickness of the pressurized negative electrode laminate may be 50 to 90% of a thickness of the negative electrode laminate prior to the pressurization, and a thickness of the pressurized positive electrode laminate may be from 50 to 90% of a thickness of the positive electrode laminate prior to the pressurization.

In one embodiment of the present invention, the solid electrolyte layer may be fabricated by (a) laminating the first release film, the solid electrolyte layer, and the second release film, sequentially, to form a solid electrolyte layer laminate; (b) pressurizing the solid electrolyte layer laminate; and (c) peeling off the first release film and the second release film of the pressurized solid electrolyte layer laminate.

In one embodiment of the present invention, the solid electrolyte layer may be fabricated by applying a composition for forming a solid electrolyte layer on the positive electrode or the negative electrode.

In one embodiment of the present invention, the method may further comprise pressurizing after step (4) and before step (5).

In one embodiment of the present invention, the surface resistance of the negative electrode in contact with the solid electrolyte layer and the positive electrode in contact with the solid electrolyte layer in step (5) may be 3 mΩ/cm² or less.

In one embodiment of the present invention, the surface resistance of the negative electrode in contact with the solid electrolyte layer and the positive electrode in contact with the solid electrolyte layer in step (5) may be 0.3 mΩ/cm² or less.

In one embodiment of the present invention, a total thickness of the current collector and the negative electrode may be 20 µm to 80 µm, and a total thickness of the current collector and the positive electrode may be 100 µm to 200 µm.

In one embodiment of the present invention, step (6) may be repeated.

In one embodiment of the present invention, the solid electrolyte layer may comprise a sulfide-based solid electrolyte.

### [Advantageous Effects]

The all-solid-state battery of the present invention has a low surface resistance of the positive electrode in contact with the solid electrolyte layer and a low surface resistance of the negative electrode in contact with the solid electrolyte layer, which can improve the performance of the all-solid-state battery.

Furthermore, the all-solid-state battery manufacturing method of the present invention can reduce surface resistance by fabricating a unit cell using a release film so that the interface of the negative electrode and the positive electrode included in the unit cell can be fabricated uniformly. Furthermore, the manufacturing process is simple, and the alignment between the electrodes is easy to achieve.

### [Brief Description of Drawings]

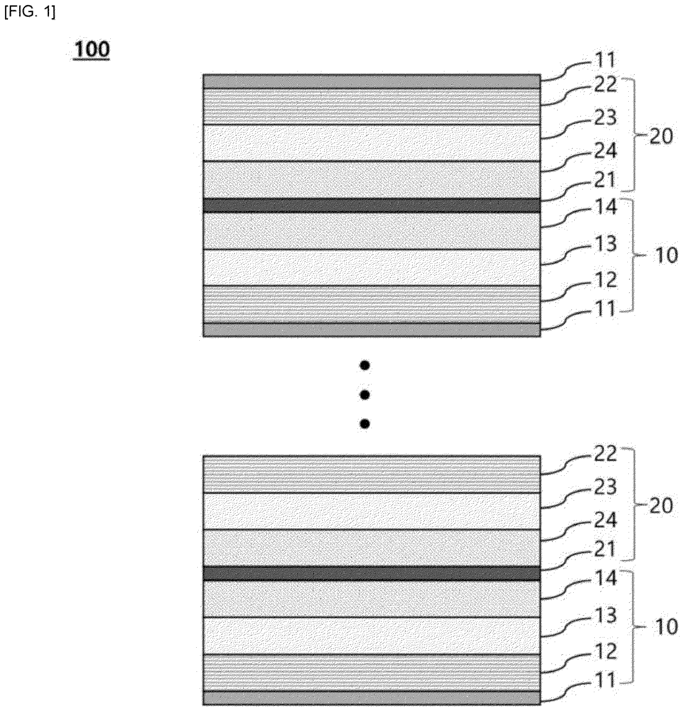

FIG. 1 illustrates an all-solid-state battery of the present invention.

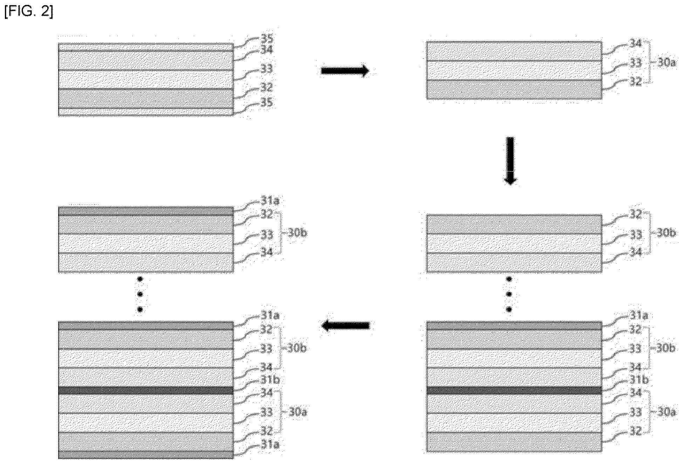

FIG. 2 is a flowchart illustrating a method for manufacturing an all-solid-state battery of the present invention.

### [Best Mode for Practicing the Invention]

Hereinafter, the present invention will be described in detail with reference to the accompanying drawings so as to facilitate practice by one having ordinary skill in the art to which the present invention pertains. However, the present invention may be implemented in many different forms and is not limited to the embodiments described herein.

In order to clearly illustrate the present invention, parts not pertinent to the description have been omitted, and identical or similar components are designated by the same or like reference numerals throughout the specification.

Furthermore, the terms and words used in this specification and the claims of the patent are not to be construed in their ordinary or dictionary meaning, but are to be construed with a meaning and concept consistent with the technical idea of the present invention, based on the principle that the inventor may properly define the concept of a term to best describe the invention of his own.

Hereinafter, embodiments will be described in detail with reference to the accompanying drawings. However, the present invention may be implemented in many different forms and is not limited to the embodiments described herein.

The present invention provides an all-solid-state battery which comprises a first unit cell 10 including: a current collector 11, a negative electrode 12, a solid electrolyte layer 13, and a positive electrode 14 stacked sequentially; and a second unit cell 20 including a current collector 21, a positive electrode 24, a solid electrolyte layer 23, and a negative electrode 22 stacked sequentially, wherein the first unit cell 10 and second unit cell 20 are alternately stacked so that electrodes of the same polarity are located on both sides of the current collector 11 or 21, wherein the surface resistance of the negative electrodes 12, 22 in contact with the solid electrolyte layer 13, 23 and the positive electrodes 14, 24 in contact with the solid electrolyte layer 13, 23 in the first unit cell 10 and the second unit cell 20 is 3 mΩ/cm² or less.

The first unit cell 10 comprises the current collector 11, the negative electrode 12, the solid electrolyte layer 13, and the positive electrode 14 stacked sequentially.

The first unit cell 10 includes the negative electrode 12 stacked on the current collector 11, wherein the current collector may be a negative electrode current collector 11.

The negative electrode current collector 11 is intended for the support of a negative-electrode active material, which is not particularly limited as long as it has good conductivity and is electrochemically stable in the voltage region of the lithium secondary battery. For example, the negative electrode current collector 11 may be a metal selected from a group consisting of copper, aluminum, stainless steel, titanium, silver, palladium, nickel, their alloys, and combinations thereof. The stainless steel can be surface-treated with carbon, nickel, titanium, or silver, and the alloy can preferably use an aluminum-cadmium alloy. In addition, it is also possible to use sintered carbon, a non-conductive polymer surface-treated with a conductive material, or a conductive polymer. Preferably, the negative electrode current collector 11 may be a metal selected from a group consisting of stainless steel, copper, nickel, their alloys, and combinations thereof.

The negative-electrode current collector 11 may form microscopic unevenness on its surface to strengthen the binding force with the negative-electrode active material, and may take various forms, such as films, sheets, foils, meshes, nets, porous materials, foams, non-woven materials, and the like.

The thickness of the negative electrode current collector 11 may be from 5 to 20 µm.

The negative electrode 12 is synonymous with a negative electrode active material, wherein the negative electrode active material is a material capable of reversibly inserting and removing lithium ions, a lithium metal, or a metallic material capable of being alloyed with lithium, and preferably includes one or more selected from a carbon-based negative-electrode active material, and a metallic or semi-metallic negative-electrode active material.

The carbon-based negative-electrode active material may be amorphous carbon. Examples of amorphous carbon include, but are not necessarily limited to, carbon black, acetylene black, furnace black, Ketjen Black, graphene, and the like, as long as it is classified as amorphous carbon in the relevant technical field. Amorphous carbon is carbon that is not crystalline or has very low crystallinity, as distinguished from crystalline or graphitic carbon.

The metallic or semi-metallic negative electrode active material includes one or more selected from a group consisting of gold (Au), platinum (Pt), palladium (Pd), silicon (Si), silver (Ag), aluminum (Al), bismuth (Bi), tin (Sn), and zinc (Zn), but not necessarily limited to any of these, as long as they are used as metal negative electrode active materials or semi-metal negative electrode active materials that form alloys or compounds with lithium in the relevant technical Field. For example, nickel (Ni) is not a metal negative electrode active material because it does not form an alloy with lithium.

In one embodiment, the negative electrode active material may comprise amorphous carbon only, or may comprise one or more of the following selected from a group consisting of gold (Au), platinum (Pt), palladium (Pd), silicon (Si), silver (Ag), aluminum (Al), bismuth (Bi), tin (Sn), and zinc (Zn). In another embodiment, the negative-electrode active material may comprise a mixture of amorphous carbon with one or more selected from a group consisting of gold (Au), platinum (Pt), palladium (Pd), silicon (Si), silver (Ag), aluminum (Al), bismuth (Bi), tin (Sn), and zinc (Zn). The mixing ratio of the amorphous carbon and gold mixture may be, for example, 10:1 to 1:2, 5:1 to 1:1, or 4:1 to 2:1 by weight, but is not necessarily limited to these ranges.

The solid electrolyte of the solid electrolyte layer 13 may preferably comprise a sulfide-based solid electrolyte.

The sulfide-based solid electrolyte may be, for example, at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-Lil, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m, n is positive numbers, Z is one of Ge, Zn or Ga), Li₂S-GeS₂, Li₂S-SiS₂-Li₃PO₄, Li₂S-SiS₂-LiₚMO_{q} (p, q is positive numbers, M is one of P, Si, Ge, B, Al, Ga In), Li₇₋ₓ PS₆₋ₓ Clₓ (0<x<2), Li₇₋ₓ PS₆₋ₓ Brₓ (0<x<2), and Li₇₋ₓ PS₆₋ₓIₓ (0<x<2).

The sulfide-based solid electrolyte may include, for example, an argyrodite type solid electrolyte represented by Formula 1 below:

[Formula 1] Li⁺ ₁₂₋ₙ₋ₓAⁿ⁺ X²⁻₆₋ₓ Y⁻ₓ

In the above formula, A is P, As, Ge, Ga, Sb, Si, Sn, Al, In, Ti, V, Nb, or Ta; X is S, Se, or Te; Y is Cl, Br, I, F, CN, OCN, SCN, or N₃ ; and 1<n<5, 0<x<2.

Furthermore, the sulfide-based solid electrolyte may be a compound of the argyrodite type comprising, for example, one or more selected from Li₇₋ₓ PS₆₋ₓ Clₓ (0≤x≤2), Li₇₋ₓ PS₆₋ₓ Brₓ (0≤x≤2) and Li₇₋ₓ PS₆₋ₓ Iₓ (0≤x≤2). Preferably, the sulfide-based solid electrolyte may be an argyrodite type compound comprising one or more selected from Li₆ PS₅ Cl, Li₆ PS₅ Br, and Li₆ PS₅ I, for example. Further, the sulfide-based solid electrolyte may be, for example, Li₆ PS₅Cl additionally doped with bromine (Br).

The positive electrode 14 includes a positive electrode active material, and may optionally include a conductive material and a binder.

The positive electrode active material may vary depending on the type of the all-solid-state battery. For example, the positive electrode active material may include layered compounds such as lithium cobalt oxide (LiCoOz), lithium nickel oxide (LiNiO₃), or compounds substituted with one or more transition metals; lithium manganese oxides such as the chemical formula Li₁₊ₓMn₂₋ₓO₄ (0≤x≤0.33), LiMnO₃, LiMn₂O₃, LiMnO₂; lithium copper oxide (Li₂CuO₂); vanadium oxides such as LiV₃O₈, V₂O₅, Cu₂V₂O₇; Ni site-type lithium nickel oxides represented by the chemical formula LiNi₁₋ₓMₓO₂ (M = Co, Mn, Al, Cu, Fe, Mg, B or Ga; 0.01≤x≤0.3); lithium manganese composite oxides represented by the chemical formula LiMn₂₋ₓMₓO₂ (M = Co, Ni, Fe, Cr, Zn or Ta; 0.01≤x≤0.1) or Li₂Mn₃MO₈ (M = Fe, Co, Ni, Cu or Zn); spinel structure lithium manganese composite oxides represented by LiNiₓMn₂₋ₓO₄; LiCoPO₄; LiFePOt; elemental sulfur (S₈); sulfur series compounds such as Li₂Sn (n=1), organic sulfur compounds or carbon-sulfur polymers ((C₂Sₓ)ₙ: x=2.5 ~ 50, n=2), but is not limited thereto.

The conductive material is a material that electrically connects the electrolyte and the positive-electrode active material, and serves as a channel for electrons to move from the current current collector to the positive-electrode active material, and can be used without restriction as long as it does not cause chemical changes in the lithium secondary battery and has porosity and conductivity.

For example, the conductive material can be a porous carbon-based material, such as carbon black, graphite, graphene, activated carbon, carbon fiber, etc.; metallic fibers, such as metal mesh; metallic powders, such as copper, silver, nickel, aluminum, etc.; or organic conductive materials, such as polyphenylene derivatives. These conductive materials may be used alone or in combination.

Currently commercially available conductive materials include the Acetylene Black series (such as Chevron Chemical Company or Gulf Oil Company), Ketjen Black EC series (Armak Company), Vulcan XC-72 (Cabot Company), and Super P (MMM). Examples include acetylene black, carbon black, and graphite.

Furthermore, the binder can be any binder known in the art to further enhance the bonding between the components constituting the positive electrode, and between them and the current collector.

For example, the binder can use one type, a mixture of two or more types, or a copolymer selected from a group consisting of: a fluoro-resin binder including polyvinylidene fluoride (PVdF) or polytetrafluoroethylene (PTFE); a rubber binder including styrene butadiene rubber (SBR), acrylonitrile butadiene rubber, styrene isoprene rubber; a cellulose binder including carboxymethyl cellulose (CMC), starch, hydroxypropyl cellulose, regenerated cellulose; a polyalcohol binder; a polyolefin binder including polyethylene, polypropylene; a polyimide binder; a polyester binder; and a silane binder.

The second unit cell 20 comprises the current collector 21, the positive electrode 24, the solid electrolyte layer 23, and the negative electrode 22 stacked sequentially.

The second unit cell 20 includes the positive electrode 24 stacked on the current collector 21, wherein the current collector may be a positive electrode current collector 21.

The positive electrode current collector 21 is the same as the negative electrode current collector 11 described above, and may preferably be aluminum or an aluminum alloy. The thickness of the positive electrode current collector 21 may be from 5 µm to 20 µm.

The positive electrode 24, the solid electrolyte layer 23, and the negative electrode 22 included in the second unit cell 20 are the same as the positive electrode 14, the solid electrolyte layer 13, and the negative electrode 12 included in the first unit cell 10 described above.

The all-solid-state battery of the present invention may be an alternating stack of the first unit cell 10 and the second unit cell 20, wherein electrodes of the same polarity are located on both sides of the current collector 11 or 21.

In one embodiment, when the second unit cell 20 is stacked on the first unit cell 10, the positive electrode current collector 21 of the second unit cell 20 may be stacked on the positive electrode 14 of the first unit cell 10. Thus, the two sides of the positive electrode current collector 21 may include the positive electrode 14 of the first unit cell 10 and the positive electrode 24 of the second unit cell 20.

In another embodiment, when the first unit cell 10 is stacked on the second unit cell 20, the negative electrode current collector 11 of the first unit cell 10 may be stacked on the negative electrode 22 of the second unit cell 20. Thus, the two sides of the negative electrode current collector 11 may include the negative electrode 22 of the second unit cell 20 and the negative electrode 12 of the first unit cell 10.

When the first unit cell 10 and the second unit cell 20 are stacked alternately, the outermost layer of the all-solid-state battery 100 has a positive electrode or a negative electrode located thereon. Therefore, it may be desirable to form a positive electrode current collector or a negative electrode current collector at the outermost layer of the all-solid-state battery 100 by stacking a positive electrode current collector or a negative electrode current collector on the positive electrode or negative electrode of the outermost layer.

The all-solid-state battery 100 of the present invention comprises negative electrodes 12, 22 and positive electrodes 14, 24 contained in a first unit cell 10 and a second unit cell 20, wherein the interface in contact with the solid electrolyte layer 13, 23 is uniform so as to exhibit a low surface resistance, and the surface resistance is 3 mΩ/cm² or less, preferably 1 mΩ/cm² or less, more preferably 0.5 mΩ/cm² or less, most preferably 0.3 mΩ/cm² or less.

Thus, the all-solid-state battery 100 of the present invention may exhibit superior performance.

Here, the total thickness of the current collector 11 combined with the negative electrodes 12, 22 may be 20 µm to 80 µm, preferably 30 µm to 70 µm. Furthermore, the total thickness of the current collector 21 and the positive electrodes 14, 24 may be 100 µm to 200 µm, preferably 120 µm to 170 µm. Specifically, in the first unit cell 10, the total thickness of the current collector 11 and the negative electrode 12 may be 20 µm to 80 µm, preferably 30 µm to 70 µm. Further, in the second unit cell 20, the total thickness of the current collector 21 and the positive electrode 24 may be 100 µm to 200 µm, preferably 120 µm to 170 µm.

The uniform interface of the negative electrodes 12, 22 in contact with the solid electrolyte layer 13, 23 and the positive electrodes 14, 24 in contact with the solid electrolyte layer 13, 23 is attributed to the manufacturing method of the present invention for the all-solid-state battery, and the manufacturing method will be described later.

Among conventional all-solid-state batteries, all-solid-state batteries using sulfide-based solid electrolyte as the solid electrolyte suffer from the problem that the electrodes are porous when manufactured by roll-to-roll pressurization method, making it difficult to make interfacial contact. To solve this problem, a three-dimensional pressurization method was performed through hydrostatic pressurization, but the size of the battery that could be pressurized was limited by the chamber size of the isostatic pressurization equipment.

Also, it was necessary to fabricate an all-solid battery by repeating a complex process of laminating a negative electrode on a solid electrolyte layer sheet and pressurizing it, then laminating a solid electrolyte layer sheet on it and pressurizing it, and then laminating a positive electrode on it and pressurizing it. Thus, there was a problem that it was difficult to align the electrodes that are laminated as the process is repeated.

In addition, in the case of positive electrodes and negative electrodes, positive electrodes and negative electrodes are fabricated by overcoating positive-electrode active material or negative-electrode active material on the current collectors. In this case, the surface of each of the positive electrodes and negative electrodes is uneven, resulting in high surface resistance, and it is not possible to fabricate an all-solid-state battery with excellent performance.

Accordingly, the present invention provide a method for manufacturing an all-solid-state battery that can solve the problems.

The present invention relates to a method for manufacturing an all-solid-state battery, the method comprising:
(1) fabricating a negative electrode laminate (not shown) by stacking a first release film 35, a negative electrode 32, and a second release film (not shown) sequentially;
(2) fabricating a positive electrode laminate by laminating the first release film 35, the positive electrode 34, and the second release film (not shown) sequentially;
(3) peeling off the second release film of the negative electrode laminate and the second release film of the positive electrode laminate;
(4) disposing a solid electrolyte layer 33 between the negative electrode 32 laminated on the first release film 35 and the positive electrode 34 laminated on the first release film 35;
(5) peeling off the first release film 35 of the negative electrode 32 and the first release film 35 of the positive electrode 34, and fabricating a plurality of unit cells 30 comprising the negative electrode 32, the solid electrolyte layer 33, and the positive electrode 34 by punching them to a certain size;
(6) disposing a current collector 31 between one unit cell 30a and another unit cell 30b, wherein electrodes of the same polarity are positioned on both sides of the current collector 31; and
(7) stacking the current collector 31 on each of the electrodes positioned at the outermost layer.

Step (1) is to fabricate a negative electrode laminate by stacking the first release film 35, the negative electrode 32, and the second release film sequentially, and step (2) is to fabricate a positive electrode laminate by stacking the first release film 35, the positive electrode 34, and the second release film sequentially.

The first release film 35 and the second release film may be the same or different from each other, and are not particularly limited to those used in the art, and may be one or more selected from a group consisting of polyethylene terephthalate (PET), polyimide (PI), poly(methylmethacrylate) (PMMA), cellulose tri-acetate (TAC), polypropylene (PP), polyethylene (PE), and polycarbonate (PC). Furthermore, the first release film 35 and the second release film may have a coating or surface treatment applied to the first side on which the negative electrode or the positive electrode is stacked so that no residue remains when peeled off. Examples of such surface treatments include plasma treatment, surface modification treatment such as sulfonation treatment, or peeling treatment such as silicon treatment, long ring alkyl treatment, fluorination treatment, etc.

The negative electrode laminate may be fabricated by applying or laminating a negative electrode active material on one side of the first release film 35 to fabricate a negative electrode 32 formed on the first release film 35, and laminating a second release film on the negative electrode 32.

Furthermore, the positive electrode laminate may be fabricated by applying or laminating a positive electrode active material on one side of the first release film 35 to fabricate a positive electrode 34 formed on the first release film 35, and laminating a second release film on the positive electrode 34.

The negative electrode active material and the positive electrode active material may be as described above.

In one embodiment, the negative electrode 32 may be fabricated by dissolving a negative electrode active material in a solvent to form a composition for forming a negative electrode in the form of a slurry, followed by applying the composition to a first release film 35 and drying to form a negative electrode 32 on the first release film 35. A second release film may then be laminated onto the negative electrode 32.

In one embodiment, the positive electrode 34 may be fabricated by dissolving a positive electrode active material in a solvent to form a composition for forming a positive electrode in the form of a slurry, followed by applying the composition to a first release film 35 and drying to form a positive electrode 34 on the first release film 35. A second release film may then be laminated onto the positive electrode 34.

In addition to the positive electrode active material, the positive electrode 34 may further comprise a conductive material, a binder, and a solid electrolyte, and the conductive material, binder, and solid electrolyte are as described above.

In the negative electrode laminate, since the negative electrode 32 is located between the first release film 35 and the second release film, the surface of the negative electrode 32 in contact with the first release film 35 and the surface of the negative electrode 32 in contact with the second release film can be fabricated very uniformly.

Furthermore, in the positive electrode laminate, since the positive electrode 34 is located between the first release film 35 and the second release film, the surface of the positive electrode 34 in contact with the first release film 35 and the surface of the positive electrode 34 in contact with the second release film can be fabricated very uniformly.

The method may further comprise the step of pressurizing the negative electrode laminate fabricated in step (1) and the positive electrode laminate fabricated in step (2), in which the pressurization may be at a pressure of 10 to 100 MPa at a temperature of 25 to 60°C for no more than 5 minutes.

By performing the pressurization, the surface of the negative electrode 32 in contact with the first release film 35 and the surface of the negative electrode 32 in contact with the second release film in the negative electrode laminate fabricated in step (1) above can be fabricated more uniformly. Also, in the positive electrode laminate fabricated in step (2) above, the surface of the positive electrode 34 in contact with the first release film 35 and the surface of the positive electrode 34 in contact with the second release film can be fabricated very uniformly.

The thickness of the pressurized negative electrode laminate may be from 50 to 90% of the thickness of the negative electrode laminate prior to the pressurization, and the thickness of the pressurized positive electrode laminate may be from 50 to 90% of the thickness of the positive electrode laminate prior to the pressurization.

Step (3) may be to peel off the second release film of the negative electrode laminate and the second release film of the positive electrode laminate, such that the second release film is peeled off to dispose a solid electrolyte layer 33 between the positive electrode 34 and the negative electrode 32.

Step (4) above is the step of disposing a solid electrolyte layer 33 between the negative electrode 32 laminated on the first release film 35 and the positive electrode 34 laminated on the first release film 35. More specifically, it may be to dispose the solid electrolyte layer 33 between a first side of the negative electrode from which the second release film is peeled off and a first side of the positive electrode from which the second release film is peeled off.

In one embodiment, the solid electrolyte layer 33 may be fabricated by: (a) fabricating a solid electrolyte layer laminate by laminating a first release film 35, a solid electrolyte, and a second release film sequentially; (b) pressurizing the solid electrolyte layer laminate; and (c) peeling off the first release film 35 and the second release film of the pressurized solid electrolyte layer laminate.

The first release film 35 and the second release film may be as described above.

Step (a) above is the step of fabricating a solid electrolyte layer laminate by stacking the first release film 35, the solid electrolyte, and the second release film sequentially.

The solid electrolytecan be formed by mixing a solid electrolyte powder, a binder, and a solvent to fabricate a slurry-type solid electrolyte layer forming composition, and then applying and drying the composition on the first release film 35 to form the solid electrolyte on the first release film 35. Subsequently, a second release film may be laminated on the solid electrolyte.

The solid electrolyte may preferably comprise a sulfide-based solid electrolyte, and the sulfide-based solid electrolyte may be as described above. Furthermore, the binder and solvent may be used without special restrictions so long as they are materials that do not react with the sulfur in the solid electrolyte.

Step (b) is the step of pressurizing the solid electrolyte layer laminate fabricated in step (a), which may be the same as the process for pressurizing the negative electrode laminate and the positive electrode laminate described above.

Step (c) is the step of peeling off the first release film 35 and the second release film of the pressurized solid electrolyte layer laminate, wherein by peeling off the first release film 35 and the second release film, the solid electrolyte layer 33 may be fabricated.

Thus, the solid electrolyte layer 33 may be in the form of a film, and the film-like solid electrolyte layer 33 may be disposed between the negative electrode 32 laminated on the first release film 35 and the positive electrode 34 laminated on the first release film 35.

Furthermore, since the solid electrolyte layer 33 is fabricated using a release film, the surface of both sides of the solid electrolyte layer 33 can be fabricated very uniformly.

In another embodiment, the solid electrolyte layer 33 may be formed by mixing a solid electrolyte powder, a binder, and a solvent to fabricate a slurry-type solid electrolyte layer forming composition, then applying and drying the composition on the first release film 35 to form a solid electrolyte layer 33 on the first release film 35, and then the first release film 35 can be peeled off.

In another embodiment, the solid electrolyte layer 33 may be fabricated by applying and drying a composition for forming a solid electrolyte layer on the positive electrode 34 or negative electrode 32.

For example, a solid electrolyte layer 33 may be fabricated by applying and drying a composition for forming a solid electrolyte layer on the negative electrode 32 laminated on the first release film 35, and the positive electrode 34 laminated on the first release film 35 may be laminated on the solid electrolyte layer 33. At this time, the negative electrode 32 and the positive electrode 34 may be located on both sides of the solid electrolyte layer 33, respectively.

For example, a composition for forming a solid electrolyte layer may be applied and dried on the positive electrode 34 laminated on the first type release film 35, thereby manufacturing a solid electrolyte layer 33. The negative electrode 32 laminated on the first release film 35 may then be laminated on the solid electrolyte layer 33. At this time, the negative electrode 32 and the positive electrode 34 may be located on both sides of the solid electrolyte layer 33, respectively.

Step (4) may be the step of fabricating a laminate comprising a first release film 35, a negative electrode 32, a solid electrolyte layer 33, a positive electrode 34, a first release film 35.

The method may further comprise the step of pressurization after step (4) and before step (5). The pressurization may be a high temperature pressurization using CIP, WIP, or top and bottom plates. The pressurization conditions are not particularly limited, and pressurization conditions used to fabricate an all-solid-state battery can be used, preferably at a pressure of 300 to 800 MPa at 60 to 100 °C for 10 to 60 minutes to fabricate a thickness of the solid electrolyte layer 33 after pressurization of 20 to 100 µm. For example, a thickness of 50 µm of the solid electrolyte layer 33 after pressure can be fabricated by pressurizing at a pressure of 500 MPa at 80 °C for 30 minutes.

By performing the pressurization, the negative electrode 32 and the positive electrode 34 are bonded with the solid electrolyte layer 33, and the bonding is strengthened, and the peeling of the first release film 35 in step (5) described later may be facilitated.

Step (5) above is the step of peeling off the first release film 35 of the negative electrode 32 and the first release film 35 of the positive electrode 34, and fabricating a plurality of unit cells 30 including the negative electrode 32, the solid electrolyte layer 33, and the positive electrode 34 by punching them into a certain size.

As the unit cell 30 is fabricated using the first release film 35 and the second release film, the surface of the negative electrode 32 in contact with the first release film 35, the surface of the negative electrode 32 in contact with the second release film, the surface of the positive electrode 34 in contact with the first release film 35, and the surface of the positive electrode 34 in contact with the second release film 35 may be fabricated very uniformly. That is, the two sides of the negative electrode 32 and the two sides of the positive electrode 34 may be fabricated with very uniform surfaces. Accordingly, the negative electrode 32 and the positive electrode 34 included in the unit cell 30 may have very low surface resistance.

The surface resistance of the positive electrode 34 in contact with the solid electrolyte layer 33 included in the unit cell 30 and the negative electrode 32 in contact with the solid electrolyte layer 33 may be 3 mΩ/cm² or less, preferably 1 mΩ/cm² or less, more preferably 0.5 mΩ/cm² or less, and most preferably 0.3 mΩ/cm² or less. If the unit cell 30 is fabricated by a conventional method, such as overcoating, without using the first release film 35 and the second release film, the surface of the negative electrode 32 and the positive electrode 34 may be uneven and the surface resistance may be 5 mΩ/cm² or more, in which case an all-solid-state battery having excellent performance due to high surface resistance cannot be fabricated.

Step (6) is the step of disposing the current collector 31 between one unit cell 30a and the other unit cell 30b, in which electrodes of the same polarity are positioned on both sides of the current collector 31.

The current collector has a thickness of 5 to 20 µm, and the description of the current collector may be as described above.

In one embodiment, the current collector 31 can be a negative electrode current collector 31a, and the negative electrode 32 of one unit cell 30a and the negative electrode 32 of another unit cell 30b can be located on both sides of the negative electrode current collector 31a. Further, the total thickness of the current collector 31 combined with the negative electrode 32 may be 20 µm to 80 µm, preferably 30 µm to 70 µm.

In another embodiment, the current collector 31 can be a positive electrode current collector 31b, and the positive electrode 34 of the one unit cell 30a and the positive electrode 34 of the another unit cell 30b can be located on both sides of the positive electrode current collector 31b. Further, the total thickness of the current collector 31 combined with the positive electrode 34 may be 100 µm to 200 µm, preferably 120 µm to 170 µm.

Step (6) above can be repeated, and an all-solid-state battery 100 in the form of stacked cells with a plurality of unit cells 30 can be fabricated.

Step (7) is a step of laminating the current collector 31 on the electrode located in the outermost layer. The two electrodes located at the outermost layer may have the same or different polarity.

The all-solid battery 100 thus manufactured in the aforementioned step (7) can be placed in a jig, and when the charging and discharging of the all-solid battery 100 is activated, electrical contact between the current collector 31 and the positive electrode 34 or negative electrode 32 of the unit cell 30 can be made due to the driving pressure so that the all-solid battery 100 is ultimately manufactured. The current collector 31 may not be easily delaminated, thereby providing an all-solid-state battery 100 with excellent stability.

The present invention also relates to an all-solid-state battery 100 fabricated by the method of the present invention. In the unit cell 30 comprising the all-solid-state battery 100 of the present invention, the surface resistance of the positive electrode 34 in contact with the solid electrolyte layer 33 and the negative electrode 32 in contact with the solid electrolyte layer 33 is 3 mΩ/cm² or less, preferably 1 mΩ/cm² or less, more preferably 0.5 mΩ/cm² or less, most preferably 0.3 mΩ/cm² or less. Because of the very low surface resistance of the positive electrode 34 and the negative electrode 32, the all-solid-state battery 100 of the present invention may exhibit excellent performance.

### [Embodiment for Practicing the Invention]

Hereinafter, preferred embodiments are presented to facilitate understanding of the present invention, but the following embodiments are only an example of the present invention, and it is obvious to those skilled in the art that various changes and modifications are possible within the scope of the present invention and the technical idea, and it is also obvious that such changes and modifications fall within the scope of the appended patent claims.

### <Manufacturing of all-solid-state battery>

### Example 1.

Silicone-coated polyethylene terephthalate was used as a first release film and a second release film.

A composition for forming a negative electrode in the form of a slurry mixed with nano-sized silver (Ag) powder and amorphous carbon was applied to one side of the first release film and dried to form a negative electrode on the first release film. Then, a second release film was laminated on the negative electrode to fabricate a negative electrode laminate.

A positive electrode active material (NCM811 coated with LiNbO₃), a conductive material (amorphous carbon), a binder (SBR system), and a solid electrolyte (Li₆PS₅Cl) were mixed in a ratio of 70:5:5:20, and added to a solvent to fabricate a composition for forming a positive electrode in the form of a slurry, and the composition was applied to a first surface of the first release film and dried at a temperature of 100°C for 6 hours to form a positive electrode on the first release film. Then, the second release film was laminated on the positive electrode to fabricate a positive electrode laminate.

Li₆PS₅Cl was used as a solid electrolyte, and a composition for forming a solid electrolyte layer in the form of a slurry was prepared by adding it to a solvent, and the composition was applied to one side of the first release film and dried to form a solid electrolyte layer on the first release film. A solid electrolyte layer laminating agent was then fabricated by laminating the second release film on the solid electrolyte layer.

The negative electrode laminate, positive electrode laminate, and solid electrolyte layer laminate were each pressurized by applying a pressure of 10 to 100 MPa for 5 minutes at a temperature of 25 to 60°C.

The second release film of the negative electrode laminate was peeled off, and the second release film of the positive electrode laminate was peeled off. Further, the first release film and the second release film of the solid electrolyte layer laminate were peeled off to obtain a solid electrolyte layer.

A solid electrolyte layer was disposed between the negative electrode and the positive electrode, which was pressurized to 500 MPa. Each of the first release films located on one side of the positive electrode and the negative electrode was then peeled off, and a plurality of unit cells each comprising a positive electrode/solid electrolyte layer/negative electrode were fabricated by punching them into a size of 20x20 cm.

Between the positive electrode of one unit cell and the positive electrode of the other unit cell, a 10 µm thick aluminum as a positive electrode current collector was disposed. The negative electrode was then laminated with a 10 µm thick SUS as a negative electrode current collector, and another unit cell was laminated on top of it so that the negative electrode of the unit cell was formed on the negative electrode current collector. The process was repeated to stack the unit cells so that a negative electrode was formed on the outermost layer. A negative electrode current collector was then stacked on the outermost layer to fabricate an all-solid-state battery.

The all-solid-state battery was placed in the jig, and a driving pressure of 10 MPa was applied to ultimately fabricate the all-solid-state battery.

### Comparative Example 1.

A negative electrode was fabricated by applying a composition for forming the negative electrode in the form of a slurry mixed with nano-sized silver (Ag) powder and amorphous carbon with a thickness of 150 µm on a 10 µm thick SUS, which is a negative electrode current collector.

A positive electrode active material (NCM811 coated with LiNbO₃), a conductive material (amorphous carbon), a binder (SBR-based), and a solid electrolyte (Li₆PS₅Cl) were mixed in a ratio of 70:5:5:20, and added to a solvent to fabricate a composition for forming the positive electrode in the form of a slurry, and the composition was applied to a first surface of 10 µm thick aluminum, which is a current collector of the positive electrode, and dried at a temperature of 100°C for 6 hours, and then rolled to form a positive electrode.

After overcoating the surface of the positive electrode with the solid electrolyte (Li₆PS₅Cl) and pressurizing it to 500 MPa and laminating the positive electrode and the solid electrolyte layer, a negative electrode (a side not in contact with the negative electrode current collector) was stacked on the solid electrolyte layer and pressurized to 500 MPa to fabricate a unit cell. The process was repeated to fabricate multiple unit cells, and an all-solid-state battery was fabricated by stacking the unit cells by placing electrodes of the same polarity between the current collectors.

The all-solid-state battery was placed in the jig, and a driving pressure of 10 MPa was applied to ultimately fabricate the all-solid-state battery.

### Experimental Example 1. Measurement of the Surface Resistance of the Unit Cell Electrode

The surface resistance of the negative electrodes comprising the unit cells fabricated in Example 1 and Comparative Example 1 was measured.

The surface resistance was measured using a HIOKI RM2610 instrument.

As a result, the surface resistance of the negative electrode of the unit cell in Example 1 was 0.2132 mΩ/cm², while the surface resistance of the negative electrode of the unit cell in Comparative Example 1 was 7.4283 mΩ/cm².

In other words, the surface resistance of the negative electrode of the unit cell of Example 1 was about 35 times lower than the surface resistance of the negative electrode of Comparative Example 1. This is a result of fabricating the negative electrode using a release film, and it can be seen that the surface of the negative electrode can be fabricated uniformly by the release film, resulting in a low surface resistance. On the other hand, it can be seen that the negative electrode of the unit cell of Comparative Example 1 is fabricated by overcoating the negative-electrode active material on the negative-electrode current collector, and it is difficult to fabricate the surface uniformly, resulting in a high surface resistance.

Since the lower the surface resistance, the better the performance of the all-solid-state battery, it can be predicted that the all-solid-state battery of the present invention can have excellent performance.

Also, since the positive electrode is fabricated in the same way as the negative electrode, it can be predicted that the positive electrode will also have a low surface resistance.

### [Explanation of symbols]

100: all-solid-state battery
30, 30a, 30b: unit cell
10: first unit cell
20: second unit cell
11, 21, 31: current collector
31a: negative electrode current collector
31b: positive electrode current collector
12, 22, 32: negative electrode
13, 23, 33: solid electrolyte layer
14, 24, 34: positive electrode
35: first release film

## Claims

1. An all-solid-state battery comprising:
a first unit cell comprising a current collector, a negative electrode, a solid electrolyte layer, and a positive electrode stacked sequentially; and
a second unit cell comprising a current collector, a positive electrode, a solid electrolyte layer, and a negative electrode stacked sequentially,
wherein the first and second unit cells are alternately stacked so that electrodes of a same polarity are located on both sides of the current collector, and
wherein, in the first and second unit cells, a surface resistance of the negative electrode in contact with the solid electrolyte layer and the positive electrode in contact with the solid electrolyte layer is 3mΩ/cm² or less.

2. The all-solid-state battery of claim 1, wherein the solid electrolyte layer comprises a sulfide-based solid electrolyte.

3. The all-solid-state battery of claim 1, wherein the the all-soild-state battery comprisescurrent collector formed on an electrode located at an outermost layer.

4. The all-solid-state battery of claim 1, wherein, in the first unit cell and the second unit cell, a surface resistance of the negative electrode in contact with the solid electrolyte layer and the positive electrode in contact with the solid electrolyte layer is 0.3 mΩ/cm² or less.

5. The all-solid-state battery of claim 1, wherein a total thickness of the current collector and the negative electrode is from 20 µm to 80 µm, and
wherein a total thickness of the current collector and the positive electrode is 100 µm to 200 µm.

6. A method of manufacturing an all-solid-state battery, the method comprising:
(1) fabricating a negative electrode laminate by stacking a first release film, a negative electrode, and a second release film sequentially;
(2) fabricating a positive electrode laminate by stacking a first release film, a positive electrode, and a second release film sequentially;
(3) peeling off the second release film of the negative electrode laminate and the second release film of the positive electrode laminate;
(4) disposing a solid electrolyte layer between the negative electrode laminated on the first release film and the positive electrode laminated on the first release film;
(5) peeling off the first release film of the negative electrode and the first release film of the positive electrode, punching them into a certain size, and fabricating a plurality of unit cells including the negative electrode, the solid electrolyte layer, and the positive electrode;
(6) disposing a current collector between one unit cell and another unit cell while positioning electrodes of a same polarity on both sides of the current collector; and
(7) laminating a current collector on an electrode located at an outermost layer.

7. The method of fabricating an all-solid-state battery of claim 6, wherein the method further comprises:
pressurizing the negative electrode laminate of step (1) and pressurizing the positive electrode laminate of step (2).

8. The method of manufacturing an all-solid-state battery of claim 7, wherein a thickness of the pressurized negative electrode laminate is 50 to 90% of a thickness of the negative electrode laminate prior to the pressurization, and
wherein a thickness of the pressurized positive electrode laminate is from 50 to 90% of a thickness of the positive electrode laminate prior to the pressurization.

9. The method of manufacturing an all-solid-state battery of claim 6, wherein the solid electrolyte layer is fabricated by (a) laminating a first release film, a solid electrolyte, and a second release film, sequentially, to form a solid electrolyte layer laminate;
(b) pressurizing the solid electrolyte layer laminate; and
(c) peeling off the first release film and the second release film of the pressurized solid electrolyte layer laminate.

10. The method of manufacturing an all-solid-state battery of claim 6, wherein the solid electrolyte layer is fabricated by applying a composition for forming a solid electrolyte layer on the positive electrode or the negative electrode.

11. The method of manufacturing an all-solid-state battery of claim 6, wherein the method further comprises:
pressurizing after step (4) and before step (5).

12. The method of manufacturing an all-solid-state battery of claim 6, wherein a surface resistance of the negative electrode in contact with the solid electrolyte layer and the positive electrode in contact with the solid electrolyte layer in step (5) is 3 mΩ/cm² or less.

13. The method of manufacturing an all-solid-state battery of claim 12, wherein the surface resistance of the negative electrode in contact with the solid electrolyte layer and the positive electrode in contact with the solid electrolyte layer in step (5) is 0.3 mΩ/cm² or less.

14. The method of manufacturing an all-solid-state battery of claim 6, wherein a total thickness of the current collector and the negative electrode is 20 µm to 80 µm, and a total thickness of the current collector and the positive electrode combined is 100 µm to 200 µm.

15. The method of manufacturing an all-solid-state battery of claim 6, wherein step (6) is repeated.

16. The method of manufacturing an all-solid-state battery of claim 6, wherein the solid electrolyte layer comprises a sulfide-based solid electrolyte.
